Europäisches Patentamt

European Patent Office

Office européen des brevets

(11) Veröffentlichungsnummer: **0 090 925**
**B1**

(12) **EUROPÄISCHE PATENTSCHRIFT**

(45) Veröffentlichungstag der Patentschrift:
24.09.86

(21) Anmeldenummer: 83101202.6

(22) Anmeldetag: 08.02.83

(51) Int. Cl.⁴: **B 60 C 25/00**

(54) **Verfahren und Vorrichtung zur Montage eines Vollreifens, insbesondere aus Gummi.**

(30) Priorität: 11.02.82 DE 3204765

(43) Veröffentlichungstag der Anmeldung:
12.10.83 Patentblatt 83/41

(45) Bekanntmachung des Hinweises auf die Patenterteilung:
24.09.86 Patentblatt 86/39

(84) Benannte Vertragsstaaten:
FR GB IT SE

(56) Entgegenhaltungen:
DE-U-1 681 743
FR-A-2 314 063
FR-A-2 320 200
US-A-2 538 759
US-A-3 937 265

(73) Patentinhaber: WEILNHAMMER Maschinenbau GmbH, Esterndorf 102, D-8250 Dorfen 1 (DE)

(72) Erfinder: Weilnhammer, August, Esterndorf 102, D-8250 Dorfen - Stadt 1 (DE)

(74) Vertreter: Eder, Eugen, Dipl.- Ing., Patentanwälte Dipl.- Ing. E. Eder Dipl.- Ing. K. Schieschke Elisabethstrasse 34, D-8000 München 40 (DE)

EP 0 090 925 B1

## Beschreibung

Die Erfindung bezieht sich auf eine Vorrichtung zur Montage bzw. Demontage von Vollreifen auf bzw. von Felgen, insbesondere mit Schrägschulter-, Seiten- und Verschlußringen als lösbaren Teilen, wobei dem Durchmesser der Felgen zentrisch angepaßt und gegeneinander wirkend eine Lagerung für die Felge sowie Widerlager zum axialen Verpressen des Vollreifens vorgesehen sind (siehr DE-U-1681743).

Bei der Montage von Vollreifen aus Gummi oder Kunststoffmischungen auf ringgeteilte Felgen müssen diese Vollreifen auf etwa Dreiviertel ihrer Normalbreite zusammengepreßt werden, um die eingangs genannten Felgenverschlußelemente montieren bzw. demontieren zu können. Hierzu sind sehr hohe Drücke erforderlich.

Als Stand der Technik ist es zur Montage bzw. Demontage von Vollreifen bekannt, Plattenpressen zu verwenden. Hierbei geschieht der Montagevorgang zwischen dem Pressenoberteil und einer Pressenunterplatte: Ein im Unterteil der Presse eingebauter hydraulischer Zylinder drückt die Unterplatte mit dem darauf liegenden, bereits mit der Felge vormontierten Vollreifen gegen einen Montagekorb, welcher sich an der Oberplatte abstützt. Dieser Montagekorb weist Speichen auf, wobei es erforderlich ist, durch die Speichen dieses Montagekorbes die Felgenverschlußringe zu montieren bzw. zu demontieren. Hieraus resultiert ein sehr hinderliches Arbeiten.

Weiterhin ist es erforderlich, den Vollreifen bei der Demontage zu wenden, so daß der schwere Montagekorb von Hand aus der Plattenpresse entnommen und wieder eingesetzt werden muß.

Weitere Nachteile bestehen darin, daß für jeden Felgendurchmesser ein besonderer Satz Preßwerkzeuge erforderlich ist.

Zum Stand der Technik zählt weiterhin eine sogenannte Vierklauenpresse, bei welcher der Reifen direkt mit den Klauen zusammengepreßt wird. Diese Klauen können jedoch nachteiligerweise den Vollgummireifen beschädigen, da die Preßfläche nur relativ gering ist. Zur Behebung dieses Nachteiles wurden Ausgleichsringe eingesetzt, wobei jedoch im Zusammenwirken mit den Klauen infolge der vergrößerten Fläche der Druck der Kolben-Zylinder-Einheit nicht ausreicht, um den Vollgummireifen genügend weit zusammenzupressen. Weiterhin ist für jeden Felgendurchmesser ein besonderer Satz teurer Ringe erforderlich.

Ein weiterer Nachteil dieser bekannten Vorrichtung besteht darin, daß zum Montieren bzw. Demontieren der Felgenverschlußringe die Bedienungsperson zwischen die Druckarme der Maschine hindurchgreifen muß.

Zum Stand der Technik zählt weiterhin eine Vorrichtung zum Aufbringen von Luftbereifung auf Radfelgen (DE-U 1 681 743). Diese Konstruktion ist so beschaffen, daß ein als Auflager für den Reifen dienender Arbeitstisch eine aus versenkter Lage mittels einer Antriebsvorrichtung ausfahrbare Hubvorrichtung mit Zentriermitteln für die Felge enthält und in einer bestimmten Höhenlage ein ringförmiges Widerlager für den Reifen trägt. Diese bekannte Konstruktion ist nur speziell für Luftreifen auf mehrteiligen Felgen brauchbar, da diese wenig Preßdruck erfordern und in abgepreßtem Zustand ihre Form beibehalten. Würde man bei der bekannten Konstruktion das Widerlager so massiv ausführen, daß eine Verformung ausgeschlossen ist, wäre eine Bauhöhe erforderlich, welche ein Arbeiten durch die Ringöffnung bei Vollgummireifen nicht mehr möglich macht.

Infolge der sehr erheblichen Unterschiede bei der Montage bzw. Demontage von Luftreifen und Vollreifen ist es nicht möglich, an sich bekannte Konstruktionen zur Montage von Luftreifen durch Verstärkung der entsprechenden Teile auf die Montage von Vollreifen anzuwenden.

Aufgabe der vorliegenden Erfindung ist es, eine Vorrichtung nach dem Oberbegriff des Anspruches 1 so auszugestalten, daß sie bei geringer Bauhöhe speziell für die Montage bzw. Demontage von Vollreifen geeignet ist.

Diese Aufgabe wird erfindungsgemäß dadurch gelöst, daß eine stationär horizontal angeordnete, ebene Stahlplatte mit einer den Außendurchmesser des Seitenringes der Felge übersteigenden Öffnung als Widerlager vorgesehen ist, die an Stellen höchster Biegebelastung Verstärkungsrippen aufweist und daß die Lagerung für die Felge auf einer vertikal wirkenden Hubeinheit angeordnet ist. Hierdurch ergibt sich der Vorteil, daß der Vollreifen von unten nach oben gegen die Stahlplatte gedrückt wird, wodurch die Felge im oberen Bereich frei liegt und vollkommen frei ohne Behinderung durch Speichen oder Klauen die Felgenverschlußringe zur endgültigen Befestigung der Felge am Vollreifen montiert bzw. demontiert werden können.

In weiterer Ausgestaltung der Erfindung kann die Hubeinheit als Kolben-Zylinder-Einheit ausgebildet sein, wodurch eine schnelle und wirksame Durchführung der Montage bzw. Demontage möglich ist.

Nach einem anderen Merkmal der Erfindung besteht die Möglichkeit, daß die Stahlplatte gegenüber der Kolben-Zylinder-Einheit höhenverstellbar ist, so daß es vorteilhafterweise möglich ist, verschiedenste Vollreifen mit Felgen zu verbinden bzw. die Verbindung wieder zu lösen.

Nach einem anderen Merkmal der Erfindung kann die Stahlplatte an zwei Ständern befestigt sein, wobei die Ständer in ihrer Höhe und in ihrem Abstand voneinander verstellbar sein können. Hierdurch besteht ebenfalls die Möglichkeit, die Vorrichtung auf die einzelnen, in der Praxis verwendeten Vollreifen und Felgen abzustellen.

In weiterer Ausgestaltung der Erfindung können Distanzscheiben mit unterschiedlichen Öffnungen mit der Stahlplatte verbindbar sein, so daß entsprechend der Größe der Felen eine sehr schnelle und gute Anpassung möglich ist.

Die Erfindung wird nachfolgend anhand eines in der Zeichnung dargestellten Ausführungsbeispiels näher beschrieben. in der Zeichnung zeigen:

Fig. 1 eine schematische Seitenansicht der Vorrichtung mit aufgelegtem Vollgummireifen und Felge;

Fig. 2 einen Schnitt durch einen Vollgummireifen und eine Felge sowie durch einen Teil der Vorrichtung, teils gebrochen;

Fig. 3 eine Draufsicht auf die Vorrichtung nach Fig. 1.

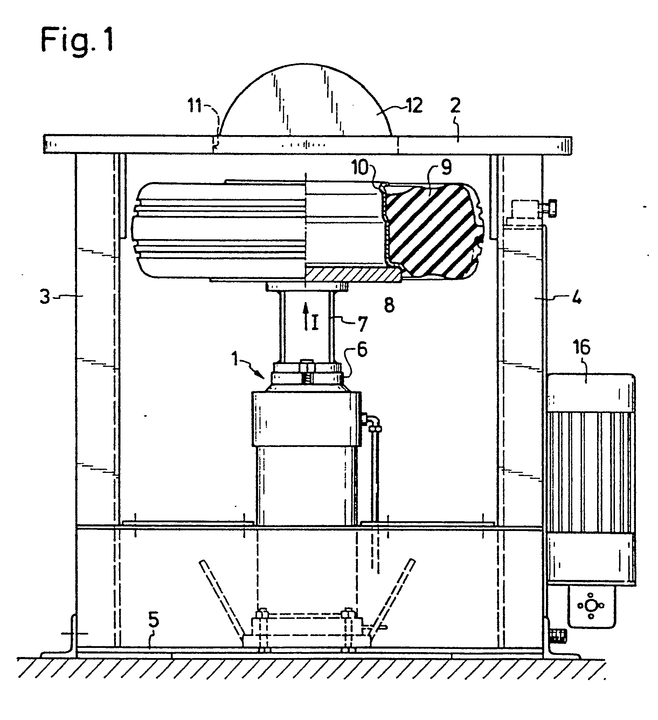

Die in Fig. 1 dargestellte Vorrichtung zur Montage bzw. zur Demontage einer Felge auf einem Vollreifen besteht im wesentlichen aus einer Kolben-Zylinder-Einheit 1 und einer im Abstand oberhalb davon angeordneten Stahlplatte 2. Über zwei Ständer 3 und 4 ist die Stahlplatte 2 oberhalb der Kolben-Zylinder-Einheit 1 angeordnet. Die Ständer 3 und 4 sind an einer Bodenplatte 5 befestigt.

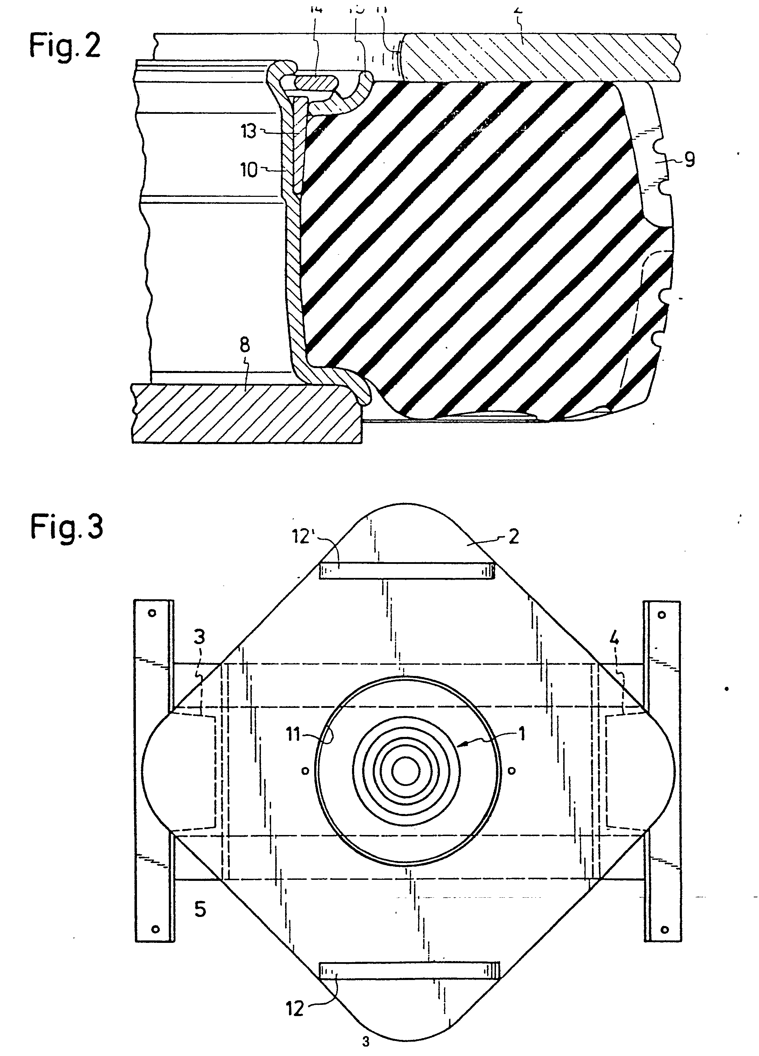

Die Kolben-Zylinder-Einheit 1 weist einen Kolben 6 auf, welcher über ein Zwischenstück 7 mit einer Platte 8 verbindbar ist. Auf die Platte 8 ist die bereits vormontierte Einheit Vollreifen 9 - Felge 10 aufgelegt. Die Stahlplatte 2 weist eine kreisrunde Öffnung 11 auf. Zur Armierung ist die Stahlplatte 2 außerdem mit zwei im Abstand voneinander angeordneten Verstärkungsrippen 12 und 12' nach Fig. 3 versehen. Diese beiden Verstärkungsrippen 12 und 12' befinden sich im Bereich des größten Biegemoments.

Wird nun gemäß Fig. 1 die vormontierte Einheit mit den Vollreifen 9 und der Felge 10 in Pfeilrichtung I durch Wirkung der Kolben-Zylinder-Einheit 1 über einen Antriebsmotor 16 nach oben gegen die Unterseite der Stahlplatte 2 gedrückt, so erfährt der Vollreifen 9 durch Anlage an die Unterseite der Stahlplatte 2 eine Zusammenpressung, wohingegen die Felge 10 im Weiterverlauf der Bewegung des Kolbens 6 um einen gewissen Betrag über die Oberseite der Stahlplatte 2 hindurchtritt. Damit ist es möglich, die in Fig. 2 näher dargestellten Felgenverschlußteile, nämlich einen Schrägschulterring 13, einen Verschlußring 14 und einen Seitenring 15 nach und nach mit der Felge 10 zu verbinden. Hierbei erfolgt die Einführung des Schrägschulterringes 13, des Verschlußringes 14 und des Seitenringes 15 auf der Oberseite der Platte 2, wobei eine gute Zugänglichkeit in diesem Montagebereich gegeben ist. Damit besteht die Möglichkeit, die Felgenverschlußringe vollkommen frei und ohne Behinderung durch Speichen oder Klauen mit der Felge zu verbinden.

Die kreisrunde Öffnung 11 der Stahlplatte 2 ist auf den Durchmesser der Felge 10 abgestimmt. Um verschiedene Felgen und verschiedene Vollgummireifen montieren zu können, ist es möglich, die Stahlplatte mit nicht näher dargestellten Distanzscheiben zu verbinden, wobei diese Distanzscheiben unterschiedliche Durchmesser aufweisen, welche auf den jeweiligen Durchmesser der Felge abgestimmt sind. Weiterhin kann auch die Unterplatte 8, welche über das Zwischenstück 7 mit dem Kolben 6 verbunden ist, auf den jeweiligen Durchmesser der Felge abgestellt werden, so daß entsprechend den in der Praxis auftretenden Forderungen stets die optimalen Anpreßdrükke gegen die Unterseite der Platte 2 bewirkt werden.

In weiterer, nicht näher dargestellter Ausführungsform ist es auch möglich, die Platte 2 gegenüber den Ständern 3 und 4 höhenverstellbar auszuführen, um beispielsweise auch Vollreifen mit größeren Abmessungen in den Zwischenraum zwischen der Unterplatte 8 der Kolben-Zylinder-Einheit 1 und der Unterseite der Platte 2 einzuführen. Weiterhin besteht auch die Möglichkeit, die Ständer 3 und 4 in ihrem Abstand voneinander verstellbar auszubilden, um Vollreifen mit größerem Durchmesser auch auf ihren Felgen montieren bzw. demontieren zu können.

Die gesamte Vorrichtung ist einfach aufgebaut und gibt den Vorteil, daß eine leichte und schnelle Montage bzw. Demontage von Felge 10 und Vollreifen 9 möglich ist. Die Stahlplatte 2 kann eine geringe Materialstärke aufweisen, da infolge der Verstärkungsrippen 12 und 12' die Stellen die höchste Biegesteifigkeit aufweisen, welche dem größten Biegemoment unterliegen.

**Patentansprüche**

1. Vorrichtung zur Montage bzw. Demontage von Vollreifen auf bzw. von Felgen, insbesondere mit Schrägschulter-Seiten und Verschlußringen (14, 15) als lösbaren Teilen, wobei dem Durchmesser der Felge (10) zentrisch angepaßt und gegeneinander wirkend eine Lagerung (8) für die Felge sowie Widerlager zum axialen Verpressen des Vollreifens vorgesehen sind, gekennzeichnet durch die Anwendung folgender Maßnahmen, daß

a) eine stationär horizontal angeordnete, ebene Stahlplatte (2) mit einer den Außendurchmesser des Seitenringes (15) der Felge (10) übersteigende Öffnung (11) als Widerlager vorgesehen ist, die an Stellen höchster Biegebelastung Verstärkungsrippen (12, 12') aufweist, und

b) die Lagerung (8) für die Felge (10) auf einer vertikal wirkenden Hubeinheit (1) angeordnet ist.

2. Vorrichtung nach Anspruch 1, dadurch gekennzeichnet, daß die Hubeinheit (1) als Kolben-Zylinder-Einheit ausgebildet ist.

3. Vorrichtung nach Anspruch 1 und 2, dadurch gekennzeichnet, daß die Stahlplatte (2) gegenüber der Kolben-Zylinder-Einheit höhenverstellbar ist.

4. Vorrichtung nach Anspruch 3, dadurch gekennzeichnet, daß die Stahlplatte (2) an zwei Ständern (3, 4) befestigt ist.

5. Vorrichtung nach Anspruch 4, dadurch gekennzeichnet, daß die Ständer (3, 4) in ihrer Höhe und ihrem Abstand voneinander verstellbar sind.

6. Vorrichtung nach Anspruch 1, dadurch gekennzeichnet,daß Distanzscheiben mit unterschiedlichen Öffnungen mit der Stahlplatte (2) verbindbar sind.

## Claims

1. A device for fitting solid tyres to rims or respectively dismantling them therefrom, more especially having rim taper-, sidewall and closure rings (14, 15) as detachable parts, in which respect, centrically adapted to the diameter of the rim (10) and acting against one another, are provided a mounting (8) for the rim as well as abutments for the axial pressing of the solid tyre, characterised by the use of the following measures, that

(a) a stationarily horizontally arranged flat steel plate (2) with an opening (11) exceeding the outside diameter of the lateral sidewall ring (15) of the rim (10) is provided as abutment, which has reinforcing ribs (12, 12') at location of maximum bending load, and

(b) the mounting (8) for tha rim (10) is arranged on a vertically acting lifting unit (1).

2. A device according to claim 1, characterised in that tha lifting unit (1) is designed as a piston/cylinder unit.

3. A device according to claim 1 and 2, characterised in that the steel plate (2) is adjustable in height relative to the piston/cylinder unit.

4. A device according to claim 3, characterised in that the steel plate (2) is fastened to two uprights (3, 4).

5. A device according to claim 4, characterised in that the uprights (3, 4) are adjustable in their height and their distance from one anothar.

6. A device according to claim 1, characterised in that distance washers having different openings are connectable to the steel plate (2).

## Revendications

1. Dispositif de montage et de démontage de bandages pleins sur ou à partir de jantes, comportant notamment un anneau de bord oblique un anneau de verrouillaqe (14) et un anneau d'arrêt de bandage (15) sous forme de pièces amovibles, dans lequel il est prévu, adaptés de façon centrée au diamètre de la jante (10) et agissant l'un vers l'autre, un appui (8) pour la jante et un contre-appui pour la compression axiale du bandage plein, caractérisé par l'utilisation des mesures suivantes:

a) il est prévu comme contre, appui une plaque d'acier plane (2) disposée horizontalement fixe et présentant une ouverture (11) dépassant le diamètre externe de l'anneau démontable d'arrêt de bandage (15) de la jante (10), cette plaque comportant des nervures de renforcement (12, 12') aux emplacements de sollicitation à la flexion plus élevée et

b) l'appui (8) prévu pour la jante (10) est disposé sur un ensemble de levage (1) à action verticale.

2. Dispositif selon la revendication 1, caractérisé en ce que l'ensemble de levage (1) est réalisé sous la forme d'un vérin.

3. Dispositif selon la revendication 1 et 2, caractérisé en ce que la plaque d'acier (2) est réglable en hauteur par rapport au vérin.

4. Dispositif selon la revendication 3, caractérisé en ce que la plaque d'acier (2) est fixée sur deux montants (3, 4).

5. Dispositif selon la revendication 4, caracétérisé en ce que les montants (3, 4) sont réglables en hauteur et en espacement l'un par rapport à l'autre.

6. Dispositif selon la revendication 1, caractérisé en ce que des disques intercalaires présentant des ouvertures différentes peuvent être reliés à la plaque d'acier (2).

## Fig. 1

Fig. 2

Fig. 3